# EUROPEAN PATENT SPECIFICATION

(11) **EP 4 607 680 B1**
(45) Date of publication and mention of the grant of the patent: **21.10.2026**
(21) Application number: 24852313.6
(22) Date of filing: 07.08.2024
(51) Int. Cl.: H01M 50/204, H01M 50/383, H01M 50/30, H01M 50/367, H01M 50/289

(54) **BATTERY PACK**
BATTERIEPACK
BLOC-BATTERIE

(30) Priority: 08.08.2023 KR 20230103279
(43) Date of publication of application: 27.08.2025
(73) Proprietor: LG Energy Solution, Ltd., Seoul 07335 (KR)
(72) Inventor: SON, Hong Se, Daejeon 34122 (KR); KO, Yoon Oh, Daejeon 34122 (KR); YOON, Young Il, Daejeon 34122 (KR); CHOI, Da Young, Daejeon 34122 (KR); KIM, Dong Woo, Daejeon 34122 (KR)
(74) Representative: Plasseraud IP
(86) International application number: PCT/KR2024/011647
(87) International publication number: WO 2025/033959

(56) References cited:
- EP-A1- 3 828 988
- EP-A1- 4 216 350
- CN-A- 112 751 121
- KR-A- 20200 107 213
- KR-A- 20210 051 543
- KR-A- 20220 056 024
- KR-A- 20220 159 819
- KR-A- 20220 168 918

## Description

### [Technical Field]

The present disclosure relates to a battery pack, characterized in that the battery pack includes a pack case including at least one discharge hole and an upper case provided with a mesh structured spark protection member corresponding to the discharge hole.

This application claims the benefit of priority from Korean Patent Application No. 10-2023-0103279, filed on Aug. 8, 2023.

### [Background]

A lithium secondary battery is representative in the form of a cell, which fundamentally consists of an electrode assembly stacked alternately with electrodes and separators, an electrode lead connected to the electrodes, and a case enclosing and sealing the electrode assembly so that the electrode lead is drawn out outwardly. In this case, depending on the shape of the electrode assembly and the shape of the case, it can be divided into a cylindrical cell, a prismatic cell, a pouch-type cell, and the like.

The output of the single cell is not large, so when it is applied to a vehicle, a plurality of cells is connected to get the desired output.

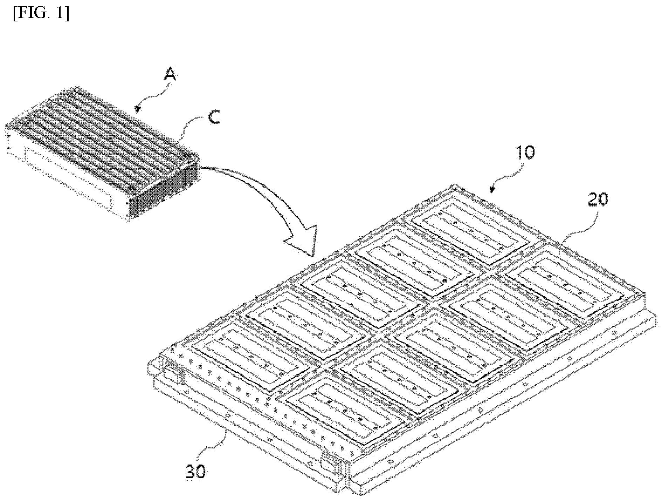

FIG. 1 illustrates a conventional battery pack 10 having a cell assembly A comprising a plurality of cells C stacked and coupled together, and wherein the cell assembly A is accommodated.

Generally, the battery pack 10 includes a pack case 30 in which a cell assembly A is seated, as shown in FIG. 1, and an upper case 20 coupled to the pack case 30 to cover the upper part of the seated cell assembly A.

A typical electric vehicle may be mounted with the battery pack 10 shown in FIG. 1, and an electric vehicle mounted with the battery pack 10 may obtain a large power output from a plurality of cell assemblies A included in the one battery pack 10.

Lithium secondary batteries, such as the battery pack 10, which can achieve a large power output as described above, are subject to the risk of explosion or fire due to heat generation, and securing safety is one of the important challenges. If these abnormalities are not responded to appropriately in the early stages, the internal temperature of the secondary battery increases rapidly due to heat generation, and the rapid increase in temperature can cause thermal runaway phenomenon, which can lead to an explosion of the secondary battery.

In order to increase the safety of various electrical products, including electric vehicles, each country has put forward several requirements for secondary battery manufacturers. For example, China has proposed regulation GB 38031-2020, which requires the introduction of a system that can control thermal runaway of cell C within 5 minutes.

China, as well as many other countries, requires a battery pack 10 with a structure that can quickly control anomalies in the accommodated cells C before they develop into explosions and fires in the battery pack 10.

Meanwhile, in the process of thermal runaway of the cell assembly A, high-temperature gas (g) generated by vaporization of the electrolyte is released inside the cell assembly A, and spark particles (p) are ejected due to a short circuit of the electrode, etc. A general battery pack 10 is provided with a gas (g) discharge path on the side through which the gas (g) can be discharged to prevent the internal pressure from rising rapidly due to the high-temperature gas (g) as described above. However, there is a risk of an explosion if the spark particles P generated above escape through the gas (g) discharge path to the oxygen-dense environment outside.

Therefore, in the prior art, there is a need for a method that selectively discharges only the gas (g) when a thermal runaway situation occurs inside and eliminates the situation where spark particles (p) come into contact with external oxygen as much as possible.

Battery packs are disclosed in documents EP 3 828 988A1, KR 2022 0168918 A and EP 4 216 350 A1.

### [Summary]

### [Technical Problem]

Accordingly, the present disclosure was conceived to solve the above problems and aims to provide a battery pack having a structure capable of selectively releasing only high-temperature gases in a thermal runaway situation.

Other objects and advantages of the present disclosure will be understood from the following description, and will become more apparent from the embodiments of the present disclosure. It will also be readily apparent that the objects and advantages of the present disclosure may be realized by the means and combinations thereof disclosed in the patent claims.

### [Technical Solution]

According to the present disclosure, a battery pack accommodating a plurality of cell assemblies is provided.

The battery pack includes: a pack case where the cell assembly is seated; an upper case coupled to the pack case to cover an upper part of a cell assembly seated inside the pack case; and at least one spark prevention member comprising a plurality of mesh holes, and provided at a lower end of the upper case, wherein the pack case includes at least one discharge hole communicating with the interior space in a side part, and the spark prevention member is provided at a location corresponding to a discharge hole of the pack case.

Moreover, the upper end of the spark prevention member is coupled to the lower end of the upper case, the spark prevention member, which is coupled to stand vertically at the lower end of the upper case, is shaped to cover the discharge hole when the upper case is coupled to the pack case, the spark prevention member is shaped such that when the upper case and pack case are coupled to each other, the mesh hole of the spark prevention member communicates with the discharge hole of the pack case.

The spark prevention member may have a mesh structure.

The spark prevention member may be erected perpendicular to the upper case such that the mesh holes communicate with the discharge holes of the pack case.

The pack case may include: a base plate supporting the lower part of the cell assembly; a center beam traversing a center part of the base plate to compartmentalize the interior space of the pack case into two, and coupled to the base plate; and a side beam coupled to a rim of the base plate to support a side part of the cell assembly.

The pack case includes at least two or more discharge holes, wherein each of the discharge holes may be formed in the side beams to communicate with the respective pack case interior space compartmentalized by the center beam.

The spark prevention member may be provided at the lower end of the upper case so as to be located on the inner side of the side beam.

The spark prevention member may be provided at the lower end of the upper case so as to be located on the outside of the side beam.

The one discharge hole is correspondingly provided with a pair of spark prevention members, wherein a pair of the paired spark prevention members may be provided at the lower end of the upper case to face each other at a predetermined distance apart.

One of the pairs of spark prevention members may be located on the inside of the side beam, and the other may be located on the outside of the side beam.

The side beam includes an insertion groove open to the upper part for insertion of the spark prevention member, wherein the insertion groove is formed at a position corresponding to a position in which the discharge hole is formed so as to intersect the discharge hole, and the upper case may be coupled to the pack case by allowing the spark prevention member to be inserted into the insertion groove.

The spark prevention member may be provided at the lower end of the upper case at a position spaced apart from the side beam in a horizontal direction at a predetermined distance.

The spark prevention member may include an electrically insulating material.

The spark prevention member may include a flame-resistant material.

The spark prevention member may have an area greater than the area of the discharge hole.

The mesh holes may be formed in any of a circular and polygonal shape.

### [Advantageous Effects]

According to the present disclosure, explosions and fires in battery packs can be prevented in advance.

### [Brief Description of the Drawings]

FIG. 1 illustrates a conventional battery pack and a cell assembly accommodated in the battery pack.
FIG. 2 is a front perspective view of a battery pack according to a first embodiment of the present invention.
FIG. 3 is a rear perspective view of the battery pack of FIG. 2.
FIG. 4 is a front view of a spark prevention member.
FIG. 5 is a bottom perspective view of a spark prevention member.
FIG. 6 illustrates the process of the upper case and pack case being coupled together.
FIG. 7 is a cross-sectional view of the battery pack of FIG. 6, showing the pack case where the discharge hole is located and the upper casing where the spark prevention member is located.
FIG. 8 illustrates the gases generated inside the battery pack being discharged to the outside through the discharge hole.
FIG. 9 illustrates the movement of spark particles inside the battery pack.
FIG. 10 illustrates the process of coupling an upper case and a pack case included in a battery pack according to a second embodiment of the present invention.
FIG. 11 is a cross-sectional view of the battery pack of FIG. 10, showing the pack case where the discharge hole is located and the upper case where the spark prevention member is located.
FIG. 12 illustrates the process of coupling an upper case and a pack case included in a battery pack according to a third embodiment of the present invention.
FIG. 13 is a cross-sectional view of the battery pack of FIG. 12, showing the pack case where the discharge hole is located and the upper case where the spark prevention member is located.
FIG. 14 illustrates the process of coupling an upper case and a pack case included in a battery pack according to a fourth embodiment of the present disclosure.
FIG. 15 is a cross-sectional view of the battery pack of FIG. 14, showing the pack case where the discharge hole is located and the upper case where the spark prevention member is located.

### [Best Mode for Carrying out the Invention]

Hereinafter, preferred embodiments of the present disclosure will be described in detail with reference to the accompanying drawings. Prior to this, it should be noted that the terms or words used in this specification and the claims are not to be construed in their ordinary or dictionary sense, but rather in a sense and concept consistent with the technical idea of the invention, based on the principle that the inventor may properly define the concept of a term to best describe his/her invention.

Accordingly, it is to be understood that the embodiments described herein and the configurations illustrated in the drawings are only the most preferred embodiments of the disclosure and are not intended to be exhaustive of the technical ideas of the invention, and that there may be various equivalents and modifications that may be substituted for them at the time of filing.

Furthermore, in describing the invention, specific descriptions of related known configurations or features are omitted where it is determined that such detailed descriptions would obscure the essence of the invention.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a battery pack having a structure that accommodates a plurality of cell assemblies and is capable of selectively releasing only high-temperature gases generated in a thermal runaway situation of the cells.

The battery pack of the present disclosure is characterized in that it includes a pack case including at least one discharge hole and an upper case with a mesh structure spark protection member corresponding to the discharge hole.

The cell assembly includes a plurality of cells stacked in one direction. Specifically, the cell assembly includes a cell stack including a plurality of cells each having electrode leads derived therefrom on both sides, and a busbar electrically connected to the electrode leads of the cell stack, and a busbar frame coupled to a front and rear surface of the cell stack, respectively.

Further, the cell assembly may further include end plates coupled to cover the busbar frame, and may further include a frame that wraps around a perimeter of the cell stack to protect the externally exposed cell stack from external impact or the like.

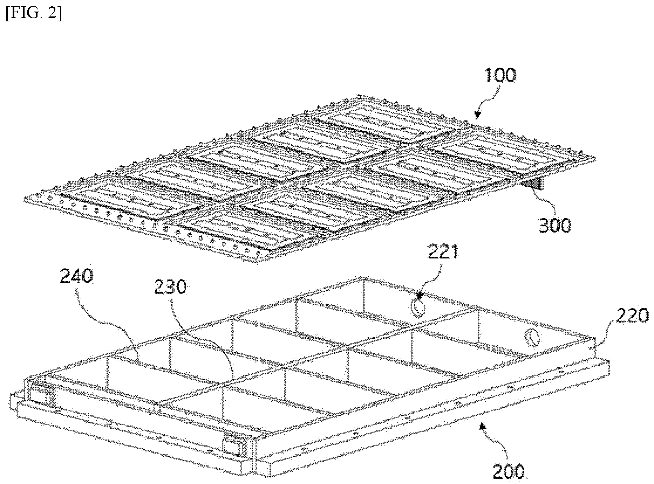

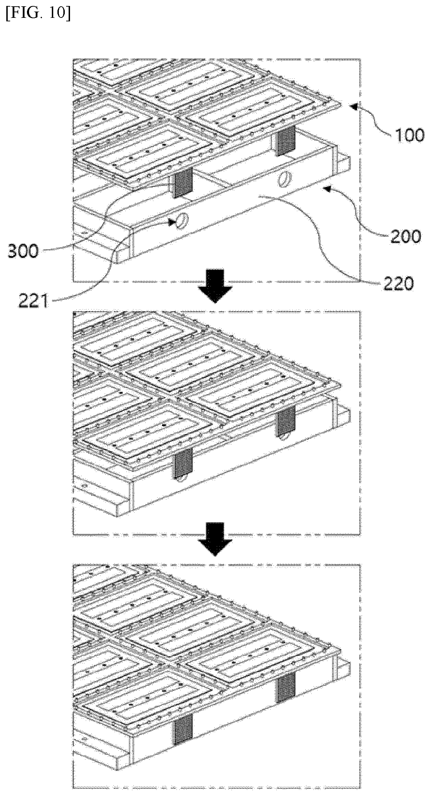

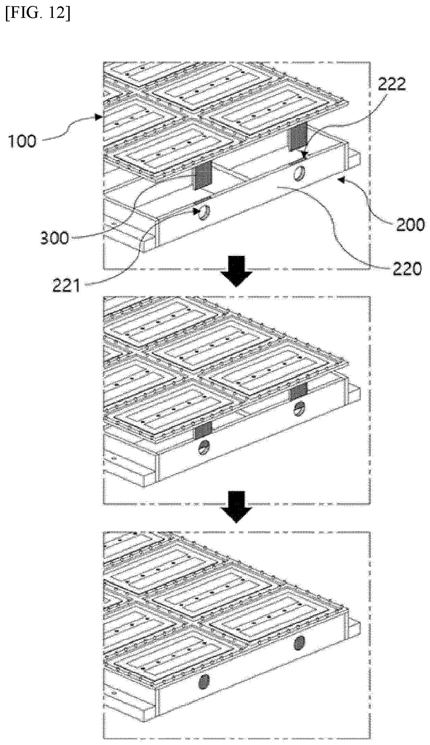

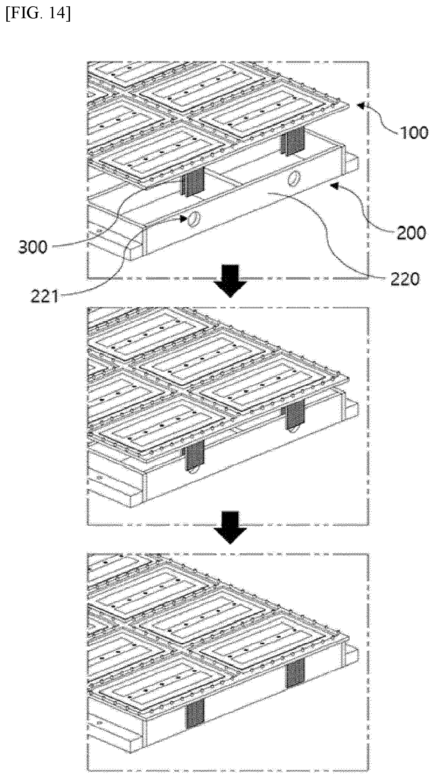

FIGS. 2 through 9 illustrate a battery pack according to a first embodiment of the present disclosure, FIGS. 10 through 11 illustrate a battery pack according to a second embodiment of the present disclosure, FIGS. 12 through 13 illustrate a battery pack according to a third embodiment of the present disclosure, and FIGS. 14 through 15 illustrate a battery pack according to a fourth embodiment of the present disclosure.

Hereinafter, specific embodiments of the battery pack of the present disclosure will be described in detail with reference to the accompanying drawings. For reference, relative positioning designations such as front to back or up and down as used in the following description are intended to aid in understanding the disclosure and refer to the orientation shown in the drawings unless otherwise defined.

### (First embodiment)

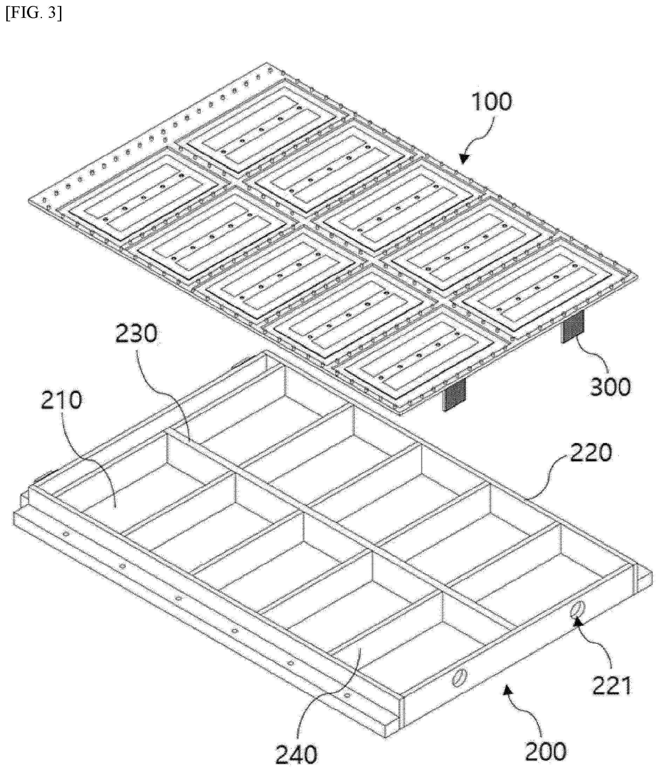

FIG. 2 is a front perspective view of a battery pack according to a first embodiment of the present disclosure, and FIG. 3 is a rear perspective view of the battery pack of FIG. 2.

A battery pack of the present disclosure includes a pack case 200 in which a cell assembly A is seated, and an upper case 100 coupled to the pack case 200 to cover an upper part of the cell assembly A seated within the pack case 200.

The pack case 200 more particularly includes a base plate 210 for supporting a lower part of the cell assembly A, a side beam 220 coupled to a rim of the base plate 210 for supporting a side part of the cell assembly A, and a center beam 230 crossing the center part of the base plate 210 and coupled to the base plate 210 so as to compartmentalize the interior space of the pack case 200 into two.

The pack case 200 may further include a cross beam 240, at each end of which is coupled to the center beam 230 and side beam 220, respectively.

The cross beam 240 serves to further compartmentalize the space inside the pack case 200 compartmentalized by the center beam 230 into cell assembly A units. However, the cross beam 240 may be excluded if desired.

The interior space of the pack case 200 may be compartmentalized by the center beam 230 and cross beam 240, but substantially each of the compartmentalized spaces may be interconnected. For example, in the event of gas (g) generation of the cell assembly A housed in any of the compartmentalized spaces, the internal pressure of the pack case 200 interior space may be equally elevated in any of the areas.

The pack case 200 may include at least one discharge hole 221 communicating with the interior space on a side part. That is, the pack case 200 may be formed with a discharge hole 221 on one side to allow the gas (g) generated inside to be discharged to the outside.

Specifically, the discharge holes 221 may be formed in the side beams 220 as shown in FIG. 2. Thus, when one of the cell assemblies A undergoes thermal runaway and generates high-temperature gas (g), the gas (g) may travel to the discharge hole 221 and be discharged to the outside.

The pack case 200 of the present disclosure includes at least two discharge holes 221, each of the discharge holes 221 being formed in the side beams 220 to communicate with the respective pack case 200 interior space compartmentalized by the center beam 230.

The discharge holes 221 may be formed on either a front and a rear surface of the pack case 200.

Referring to FIG. 2, two discharge holes 221 are formed on each side relative to the coupling site of the center beam 230 and the side beam 220.

The upper case 100 is coupled to the upper end of the side beam 220 such that the interior space of the pack case 200 is sealed from the outside.

The battery pack of the present disclosure is characterized in that it further includes a spark prevention member 300 provided at the lower end of the upper case 100, which selectively allows only gas (g) to pass through.

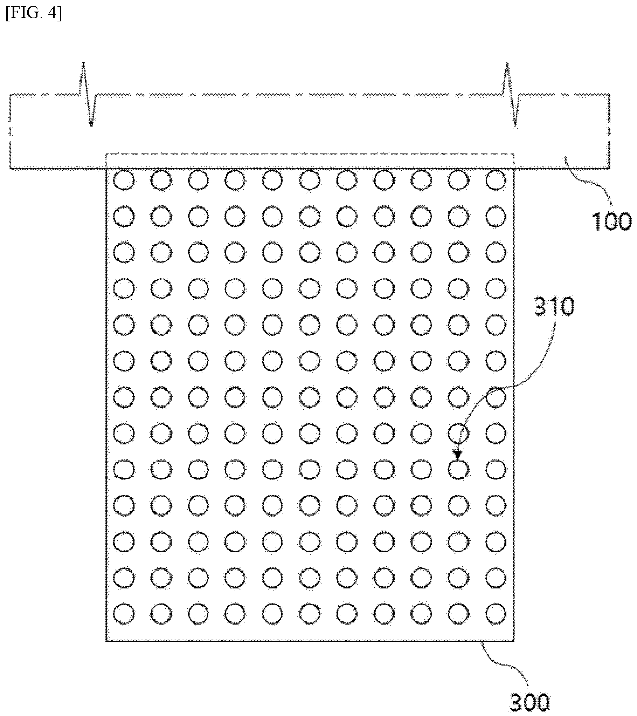

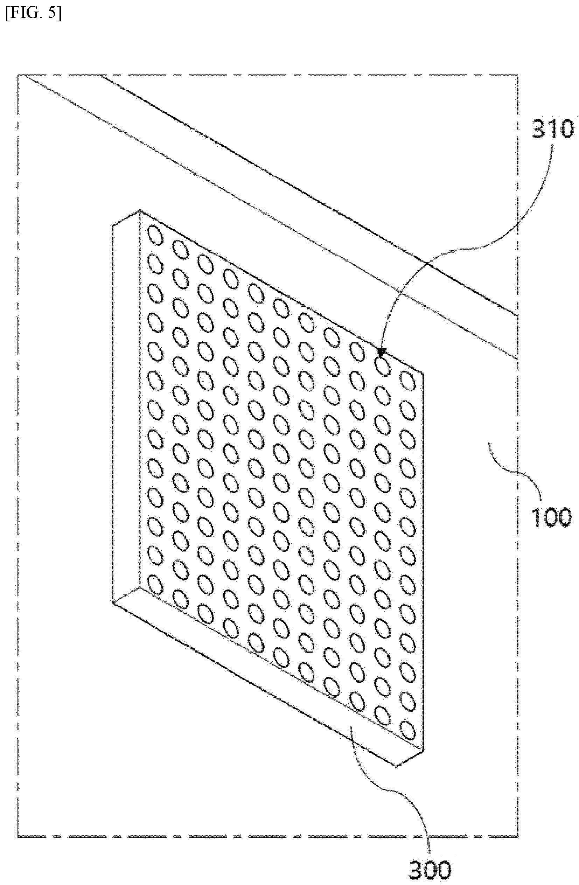

FIG. 4 is a front view of the spark prevention member 300, and FIG. 5 is a bottom perspective view of the spark prevention member 300.

The spark prevention member 300 has a mesh structure and includes a plurality of mesh holes 310, as shown in FIG. 4.

The mesh holes 310 of the spark prevention member 300 allow gas (g) to pass through and impede the movement of spark particles (p) and the like.

The spark prevention member 300 preferably includes a flame-resistant material so that it is not damaged by high-temperature gases (g) or the like. It also preferably includes an electrically insulating material so that electricity can be prevented from flowing through it.

The shape of the mesh holes 310 may be circular as shown, but is not limited thereto and may be polygonal.

The upper end of the spark prevention member 300 is coupled to the lower end of the upper case 100. More specifically, the spark prevention member 300 is erected and configured to be perpendicular to the upper case 100 as shown in FIG. 5. Thus, the gas (g) can travel in a horizontal direction and pass through the mesh holes 310 of the spark prevention member 300.

The battery pack of the present disclosure is characterized in that the spark prevention member 300 is provided in a position corresponding to the discharge hole 221 of the pack case 200.

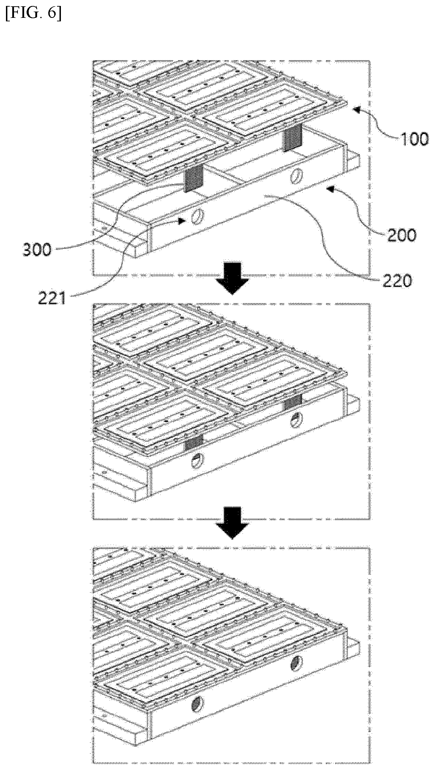

FIG. 6 illustrates the process of the upper case 100 and pack case 200 being coupled together.

Referring to FIG. 6, discharge holes 221 are formed in the side beams 220, and a spark prevention member 300 is provided at the lower end of the upper case 100 at a position corresponding to each of the discharge holes 221.

The spark prevention member 300 included in the battery pack according to the first embodiment is provided at the lower end of the upper case 100 so as to be located on the inner side of the side beam 220, as shown in FIG. 6.

The spark prevention member 300, which is coupled to stand vertically at the lower end of the upper case 100, is shaped to cover the discharge hole 221 when the upper case 100 is coupled to the pack case 200. That is, the spark prevention member 300 is shaped such that when the upper case 100 and pack case 200 are coupled to each other, the mesh hole 310 of the spark prevention member 300 communicates with the discharge hole 221 of the pack case 200.

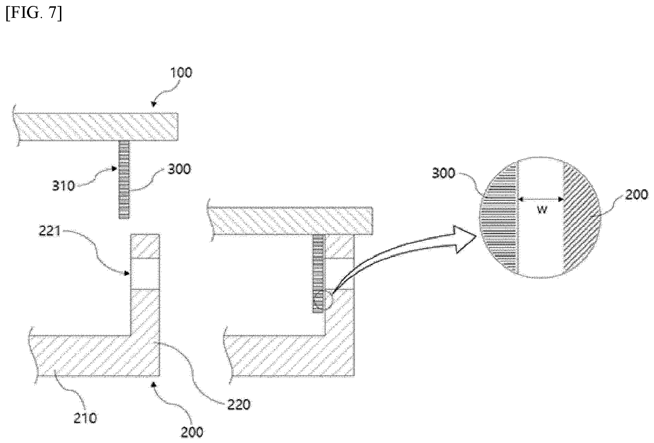

FIG. 7 is a cross-sectional view of the battery pack of FIG. 6, showing the pack case 200 where the discharge hole 221 is located and the upper case 100 where the spark prevention member 300 is located.

Preferably, the spark prevention member 300 has an area larger than the area of the discharge hole 221 so as to intercept spark particles P that are ejected toward the discharge hole 221.

The spark prevention member 300 is positioned to cover and close the entirety of the discharge hole 221 as shown in FIG. 7.

However, the spark prevention member 300 is provided at a position spaced apart at a predetermined distance from the side beam 220 so as not to contact the surface of the side beam 220. That is, the spark prevention member 300 is provided at the lower end of the upper case 100 at a position spaced apart at a predetermined distance from the side beam 220 in a horizontal direction.

Thus, a gap (w) may be formed between the spark prevention member 300 and the side beam 220.

The gap (w) serves as an auxiliary traveling pathway for the gas (g) discharged through the mesh hole 310 to go directly to the discharge hole 221 without passing through the spark prevention member 300.

**In** the event that a large amount of gas (g) is generated inside the battery pack, it may not be possible to quickly discharge the gas (g) through the mesh holes 310 of the spark prevention member 300. Therefore, in addition to the mesh holes 310, an additional passageway must be provided for the movement of the gases (g) inside to the discharge hole 221, wherein the gap (w) between the spark prevention member 300 and the side beam 220 serves as an additional movement passageway.

The spacing of the gap W may vary depending on the expected amount of gas (g) and the pressure inside the battery pack, for example.

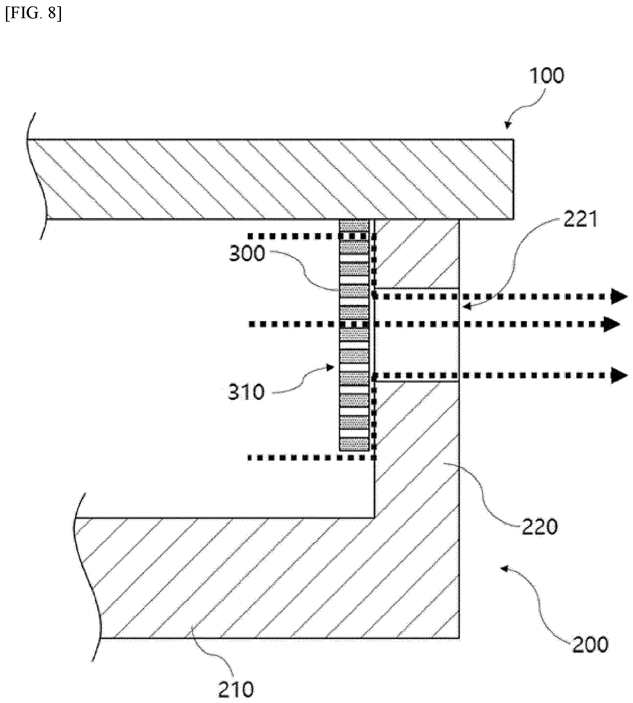

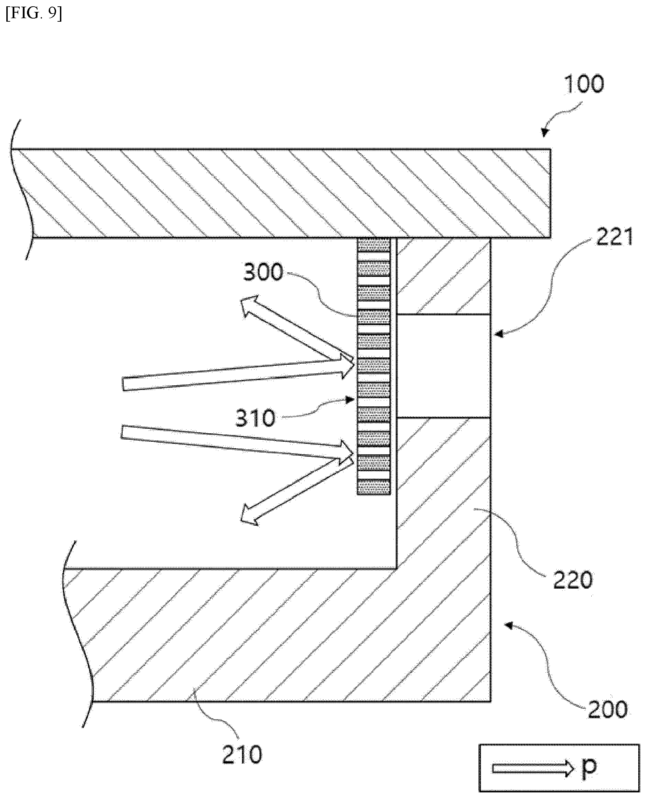

FIG. 8 illustrates gas (g) generated inside the battery pack being discharged to the outside through discharge hole 221, and FIG. 9 illustrates the movement of spark particles (p) generated inside the battery pack.

According to FIG. 8, the gas (g) reaches the discharge hole 221 through the mesh holes 310 of the spark prevention member 300, and also reaches the discharge hole 221 through the gap (w) between the spark prevention member 300 and the side beam 220.

According to FIG. 9, the spark particles (p) do not exit through the mesh holes 310 of the spark prevention member 300 and are blocked or deflected.

Thus, even if a thermal runaway phenomenon occurs in any one of the cell assemblies A accommodated therein, resulting in the generation of high-temperature gases (g) and spark particles (p), the battery pack of the present disclosure can quickly discharge the high-temperature gases (g) to the outside, and can maximally suppress the spark particles (p) from contacting oxygen from the outside.

### (Second embodiment)

The battery pack of the present disclosure allows for a more variable positioning of the side beam 220 and the spark prevention member 300.

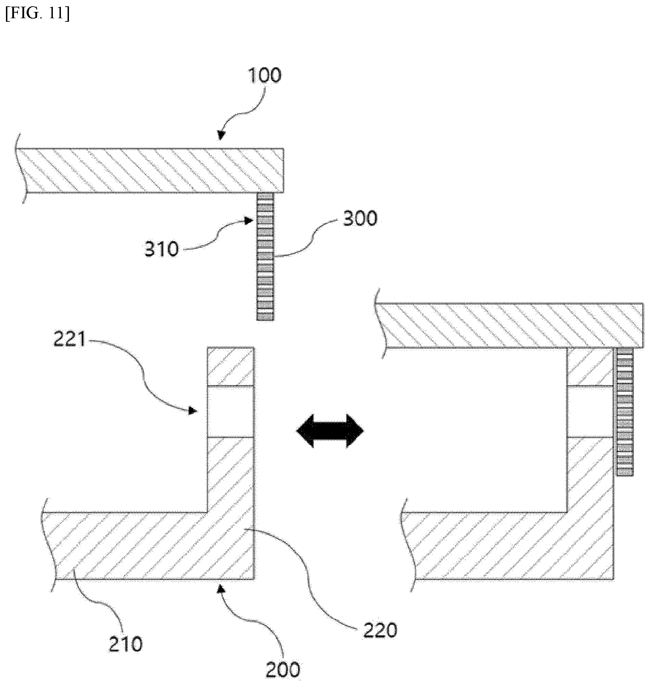

FIG. 10 illustrates the process of coupling the upper case 100 and the pack case 200 included in a battery pack according to a second embodiment of the present disclosure, and FIG. 11 illustrates a cross-sectional view of the pack case 200 where the discharge hole 221 is located and the upper case 100 where the spark prevention member 300 is located, in the battery pack of FIG. 10.

The spark prevention member 300 is provided at the lower end of the upper case 100 such that it is positioned on the outside of the side beam 220.

In this case, the spark particles (p) that exit through the discharge hole 221 without any resistance are caught by the spark prevention member 300 located outside the discharge hole 221 and are prevented from escaping to the outside.

However, the gas (g) may be freely discharged through the gap (w) between the outer surface of the side beam 220 and the spark prevention member 300.

### (Third embodiment)

The battery pack of the present disclosure may have an insertion groove 222 formed in the side beam 220 into which the spark prevention member 300 may be inserted.

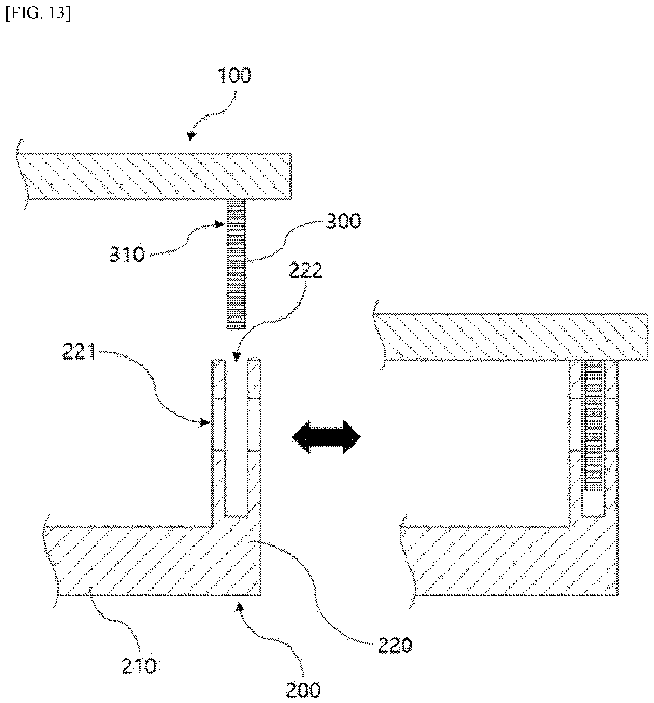

FIG. 12 illustrates the process by which the upper case 100 and the pack case 200 included in a battery pack according to a third embodiment of the present disclosure are coupled, and FIG. 13 illustrates a cross-sectional view of the pack case 200 where the discharge hole 221 is located and the upper case 100 where the spark prevention member 300 is located, in the battery pack of FIG. 12.

Referring to FIGS. 12 and 13, the side beam 220 includes an insertion groove 222 that is open to the upper part for insertion of the spark prevention member 300.

The upper case 100 is coupled with the pack case 200 by allowing the spark prevention member 300 to be inserted into the insertion groove 222. In this case, the spark prevention member 300 is preferably disposed so that it does not touch the side beam 220 in which the insertion groove 222 is formed.

The insertion groove 222 is formed at a position corresponding to the position in which the discharge hole 221 is formed so as to intersect the discharge hole 221.

Thus, the spark particles (p) passing through the discharge hole 221 may be restricted in their movement by the spark prevention member 300 inserted in the insertion groove 222.

However, in the case of the gas (g), it can be freely discharged to the outside not only through the mesh holes 310 of the spark prevention member 300, but also through the gap (w) between the insertion groove 222 and the spark prevention member 300.

### (Fourth embodiment)

The battery pack of the present disclosure may also have a double-designed spark prevention member 300 in one discharge hole 221.

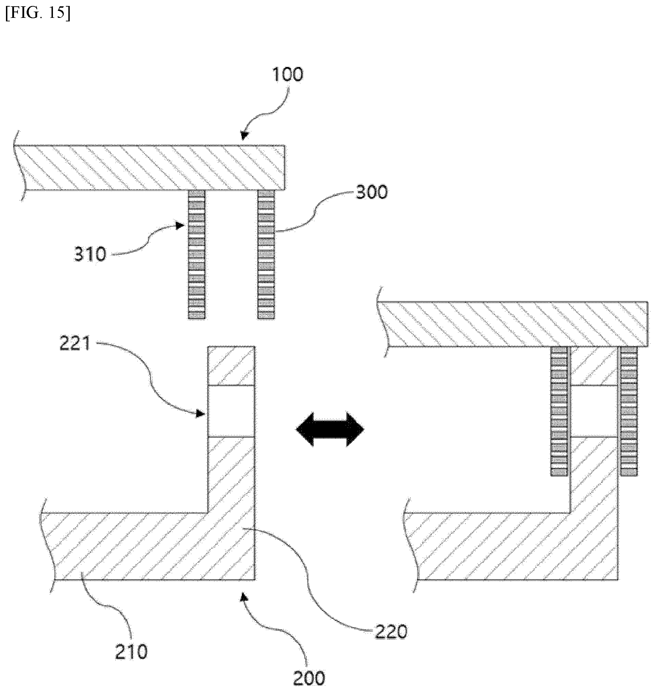

FIG. 14 illustrates the process by which the upper case 100 and pack case 200 included in a battery pack according to a fourth embodiment of the present disclosure are coupled, and FIG. 15 illustrates a cross-sectional view of the pack case 200 where the discharge hole 221 is located and the upper case 100 where the spark prevention member 300 is located, in the battery pack of FIG. 14.

The one discharge hole 221 is countered by a pair of spark prevention members 300, as shown in FIGS. 14 and 15.

A pair of the paired spark prevention members 300 are provided at the lower end of the upper case 100 to be spaced apart at a predetermined distance and facing each other.

Specifically, one of the pairs of spark prevention members 300 is located on the inner side of the side beam 220 and the other is located on the outer side of the side beam 220. Preferably, each of the pair of spark prevention members 300 is disposed so as not to contact the side beam 220.

Thus, spark particles (p) generated inside the battery pack are restricted from traveling outside by the pair of double-designed spark prevention members 300.

Specifically, gases (g) generated inside the battery pack may be restricted in their movement firstly by a spark prevention member 300 located on the inside of the pack case 200, and secondly by a spark prevention member 300 located on the outside of the pack case 200.

However, the gas (g) generated inside the battery pack may be discharged to the outside through the mesh holes 310 formed in each of the spark prevention members 300, and may be secondarily discharged to the outside through the gap (w) between each of the spark prevention members 300 and the side beam 220.

### [Description of Reference Numerals]

10: (PRIOR ART) BATTERY PACK
20: (PRIOR ART) UPPER CASE
30: (PRIOR ART) PACK CASE
100: UPPER CASE
200: PACK CASE
210: BASE PLATE
220: SIDE BEAM
221: DISCHARGE HOLE
222: INSERTION GROOVE
230: CENTER BEAM
240: CROSS BEAM
300: SPARK PREVENTION MEMBER
310: MESH HOLE
A: CELL ASSEMBLY
C: CELL
g: GAS (MOVEMENT)
p: SPARK PARTICLE (MOVEMENT)
w: GAP (SPACING)

## Claims

1. A battery pack accommodating a plurality of cell assemblies, comprising:
a pack case (200) where the cell assembly (A) is seated;
an upper case (100) coupled to the pack case (200) to cover an upper part of the cell assembly (A) seated inside the pack case (200); and
at least one spark prevention member (300) comprising a plurality of mesh holes (310), and provided at a lower end of the upper case (100), wherein
the pack case (200) includes at least one discharge hole (221) communicating with an interior space of the pack case (200) in a side part, and
the spark prevention member (300) is provided at a location corresponding to the discharge hole (221) of the pack case (200),
the battery pack is **characterized in that**:
the upper end of the spark prevention member (300) is coupled to the lower end of the upper case (100),
the spark prevention member (300), which is coupled to stand vertically at the lower end of the upper case (100), is shaped to cover the discharge hole (221) when the upper case (100) is coupled to the pack case (200), the spark prevention member (300) is shaped such that when the upper case (100) and pack case (200) are coupled to each other, the mesh hole (310) of the spark prevention member (300) communicates with the discharge hole (221) of the pack case (200).

2. The battery pack of claim 1, wherein
the spark prevention member (300) has a mesh structure.

3. The battery pack of claim 1, wherein
the spark prevention member (300) is erected perpendicular to the upper case (100) such that the mesh holes (310) communicate with the discharge holes (221) of the pack case (200).

4. The battery pack of claim 1, wherein
the pack case (200) comprises:
a base plate (210) supporting a lower part of the cell assembly (A);
a center beam (230) traversing a center part of the base plate (210) to compartmentalize the interior space of the pack case (200) into two, and coupled to the base plate (210); and
a side beam (220) coupled to a rim of the base plate (210) to support the side part of the cell assembly (A).

5. The battery pack of claim 4, wherein
the pack case (200) includes at least two or more discharge holes (221), wherein
each of the discharge holes (221) is formed in the side beams (220) to communicate with the respective pack case (200) interior space compartmentalized by the center beam (230).

6. The battery pack of claim 4, wherein
the spark prevention member (300) is provided at the lower end of the upper case (100) so as to be located on the inner side of the side beam (220).

7. The battery pack of claim 4, wherein
the spark prevention member (300) is provided at the lower end of the upper case (100) so as to be located on the outside of the side beam (220).

8. The battery pack of claim 4, wherein
the one discharge hole (221) is correspondingly provided with a pair of spark prevention members (300), wherein
a pair of the paired spark prevention members (300) is provided at the lower end of the upper case (100) to face each other at a predetermined distance apart.

9. The battery pack of claim 8, wherein
one of the pairs of spark prevention members (300) is located on the inside of the side beam (220), and the other is located on the outside of the side beam (220).

10. The battery pack of claim 4, wherein
the side beam (220) includes an insertion groove (222) open to the upper part for insertion of the spark prevention member (300), wherein
the insertion groove (222) is formed at a position corresponding to a position in which the discharge hole (221) is formed so as to intersect the discharge hole (221), and
the upper case (100) is coupled to the pack case (200) by allowing the spark prevention member (300) to be inserted into the insertion groove (222).

11. The battery pack of claim 4, wherein
the spark prevention member (300) is provided at the lower end of the upper case (100) at a position spaced apart from the side beam (220) in a horizontal direction at a predetermined distance.

12. The battery pack of claim 1, wherein
the spark prevention member (300) comprises an electrically insulating material.

13. The battery pack of claim 1, wherein
the spark prevention member (300) comprises a flame-resistant material.

14. The battery pack of claim 1, wherein
the spark prevention member (300) has an area greater than the area of the discharge hole (221).

15. The battery pack of claim 1, wherein
the mesh holes (310) are formed in any of a circular and polygonal shape.

## Patentansprüche

1. Batteriepack, der eine Vielzahl von Zellenanordnungen aufnimmt, umfassend:
ein Packgehäuse (200), in dem die Zellenanordnung (A) sitzt;
ein oberes Gehäuse (100), das mit dem Packgehäuse (200) gekoppelt ist, um einen oberen Teil der im Packgehäuse (200) sitzenden Zellenanordnung (A) abzudecken; und
mindestens ein Funkenschutzorgan (300), das eine Vielzahl von Maschenlöchern (310) umfasst und an einem unteren Ende des oberen Gehäuses (100) bereitgestellt ist,
wobei das Packgehäuse (200) mindestens ein Entladungsloch (221) beinhaltet, das mit einem Innenraum des Packgehäuses (200) in einem Seitenteil in Verbindung steht, und
das Funkenschutzorgan (300) an einer Stelle bereitgestellt ist, die dem Entladungsloch (221) des Packgehäuses (200) entspricht,
wobei der Batteriepack **dadurch gekennzeichnet ist, dass**:
das obere Ende des Funkenschutzorgans (300) mit dem unteren Ende des oberen Gehäuses (100) gekoppelt ist,
das Funkenschutzorgan (300), das gekoppelt ist, um am unteren Ende des oberen Gehäuses (100) vertikal zu stehen, geformt ist, um das Entladungsloch (221) abzudecken, wenn das obere Gehäuse (100) mit dem Packgehäuse (200) gekoppelt ist, das Funkenschutzorgan (300) geformt ist, sodass, wenn das obere Gehäuse (100) und das Packgehäuse (200) miteinander gekoppelt sind, das Maschenloch (310) des Funkenschutzorgans (300) mit dem Entladungsloch (221) des Packgehäuses (200) in Verbindung steht.

2. Batteriepack nach Anspruch 1, wobei
das Funkenschutzorgan (300) eine Maschenstruktur aufweist.

3. Batteriepack nach Anspruch 1, wobei
das Funkenschutzorgan (300) senkrecht zum oberen Gehäuse (100) aufgerichtet ist, sodass die Maschenlöcher (310) mit den Entladungslöchern (221) des Packgehäuses (200) in Verbindung stehen.

4. Batteriepack nach Anspruch 1, wobei
das Packgehäuse (200) umfasst:
eine Grundplatte (210), die einen unteren Teil der Zellenanordnung (A) stützt;
einen Mittelträger (230), der einen mittleren Teil der Grundplatte (210) durchquert, um den Innenraum des Packgehäuses (200) in zwei zu unterteilen, und mit der Grundplatte (210) gekoppelt ist; und
einen Seitenträger (220), der mit einem Rand der Grundplatte (210) gekoppelt ist, um den Seitenteil der Zellenanordnung (A) zu stützen.

5. Batteriepack nach Anspruch 4, wobei
das Packgehäuse (200) mindestens zwei oder mehr Entladungslöcher (221) beinhaltet,
wobei jedes der Entladungslöcher (221) in den Seitenträgern (220) gebildet ist, um mit dem jeweiligen durch den Mittelträger (230) unterteilten Innenraum des Packgehäuses (200) in Verbindung zu stehen.

6. Batteriepack nach Anspruch 4, wobei
das Funkenschutzorgan (300) am unteren Ende des oberen Gehäuses (100) bereitgestellt ist, um sich an der Innenseite des Seitenträgers (220) zu befinden.

7. Batteriepack nach Anspruch 4, wobei
das Funkenschutzorgan (300) am unteren Ende des oberen Gehäuses (100) bereitgestellt ist, um sich an der Außenseite des Seitenträgers (220) zu befinden.

8. Batteriepack nach Anspruch 4, wobei
das eine Entladungsloch (221) entsprechend mit einem Paar Funkenschutzorganen (300) bereitgestellt ist, wobei
ein Paar der gepaarten Funkenschutzorgane (300) am unteren Ende des oberen Gehäuses (100) bereitgestellt ist, um einander in einem vorbestimmten Abstand gegenüberzuliegen.

9. Batteriepack nach Anspruch 8, wobei
eines des Paares von Funkenschutzorganen (300) sich an der Innenseite des Seitenträgers (220) befindet, und sich das andere an der Außenseite des Seitenträgers (220) befindet.

10. Batteriepack nach Anspruch 4, wobei
der Seitenträger (220) eine zum oberen Teil hin offene Einführnut (222) zum Einführen des Funkenschutzorgans (300) beinhaltet, wobei
die Einführnut (222) an einer Position gebildet ist, die einer Position entspricht, in der das Entladungsloch (221) gebildet ist, um das Entladungsloch (221) zu schneiden, und
das obere Gehäuse (100) mit dem Packgehäuse (200) durch Ermöglichen gekoppelt wird, dass das Funkenschutzorgan (300) in die Einführnut (222) eingeführt wird.

11. Batteriepack nach Anspruch 4, wobei
das Funkenschutzorgan (300) am unteren Ende des oberen Gehäuses (100) an einer Position bereitgestellt ist, die in horizontaler Richtung in einem vorbestimmten Abstand von dem Seitenträger (220) beabstandet ist.

12. Batteriepack nach Anspruch 1, wobei
das Funkenschutzorgan (300) ein elektrisch isolierendes Material umfasst.

13. Batteriepack nach Anspruch 1, wobei
das Funkenschutzorgan (300) ein flammhemmendes Material umfasst.

14. Batteriepack nach Anspruch 1, wobei
das Funkenschutzorgan (300) eine Fläche aufweist, die größer als die Fläche des Entladungslochs (221) ist.

15. Batteriepack nach Anspruch 1, wobei
die Maschenlöcher (310) in einer beliebigen von einer kreisförmigen und polygonalen Form gebildet sind.

## Revendications

1. Bloc-batterie logeant une pluralité d'ensembles de cellules, comprenant :
un boîtier de bloc (200) dans lequel l'ensemble de cellules (A) est logé ;
un boîtier supérieur (100) couplé au boîtier de bloc (200) pour recouvrir une partie supérieure de l'ensemble de cellules (A) logé à l'intérieur du boîtier de bloc (200) ; et
au moins un élément de prévention des étincelles (300) comprenant une pluralité de trous de maille (310), et disposé à une extrémité inférieure du boîtier supérieur (100), dans lequel
le boîtier de bloc (200) comprend au moins un trou de décharge (221) communiquant avec un espace intérieur du boîtier de bloc (200) dans une partie latérale, et
l'élément de prévention des étincelles (300) est disposé à un emplacement correspondant au trou de décharge (221) du boîtier de bloc (200),
le bloc-batterie étant **caractérisé en ce que** :
l'extrémité supérieure de l'élément de prévention des étincelles (300) est couplée à l'extrémité inférieure du boîtier supérieur (100),
l'élément de prévention des étincelles (300), qui est couplé pour se tenir verticalement à l'extrémité inférieure du boîtier supérieur (100), est conformé pour recouvrir le trou de décharge (221) lorsque le boîtier supérieur (100) est couplé au boîtier de bloc (200), l'élément de prévention des étincelles (300) est conformé de sorte que, lorsque le boîtier supérieur (100) et le boîtier de bloc (200) sont couplés l'un à l'autre, le trou de maille (310) de l'élément de prévention des étincelles (300) communique avec le trou de décharge (221) du boîtier de bloc (200).

2. Bloc-batterie selon la revendication 1, dans lequel
l'élément de prévention des étincelles (300) a une structure de maille.

3. Bloc-batterie selon la revendication 1, dans lequel
l'élément de prévention des étincelles (300) est dressé perpendiculairement au boîtier supérieur (100) de telle sorte que les trous de maille (310) communiquent avec les trous de décharge (221) du boîtier de bloc (200).

4. Bloc-batterie selon la revendication 1, dans lequel
le boîtier de bloc (200) comprend : une plaque de base (210) supportant une partie inférieure de l'ensemble de cellules (A) ;
une poutre centrale (230) traversant une partie centrale de la plaque de base (210) pour compartimenter l'espace intérieur du boîtier de bloc (200) en deux, et couplée à la plaque de base (210) ; et
une poutre latérale (220) couplée à un bord de la plaque de base (210) pour supporter la partie latérale de l'ensemble de cellules (A).

5. Bloc-batterie selon la revendication 4, dans lequel
le boîtier de bloc (200) comprend au moins deux trous de décharge (221) ou plus, dans lequel
chacun des trous de décharge (221) est formé dans les poutres latérales (220) pour communiquer avec l'espace intérieur respectif du boîtier de bloc (200) compartimenté par la poutre centrale (230).

6. Bloc-batterie selon la revendication 4, dans lequel
l'élément de prévention des étincelles (300) est disposé à l'extrémité inférieure du boîtier supérieur (100) de manière à être situé sur le côté intérieur de la poutre latérale (220).

7. Bloc-batterie selon la revendication 4, dans lequel l'élément de prévention des étincelles (300) est disposé à l'extrémité inférieure du boîtier supérieur (100) de manière à être situé sur le côté extérieur de la poutre latérale (220).

8. Bloc-batterie selon la revendication 4, dans lequel
l'unique trou de décharge (221) est pourvu de manière correspondante d'une paire d'éléments de prévention des étincelles (300), dans lequel
une paire des éléments de prévention des étincelles appariés (300) est disposée à l'extrémité inférieure du boîtier supérieur (100) pour se faire face à une distance prédéterminée l'une de l'autre.

9. Bloc-batterie selon la revendication 8, dans lequel
un des éléments de la paire d'éléments de prévention des étincelles (300) est situé à l'intérieur de la poutre latérale (220), et l'autre est situé à l'extérieur de la poutre latérale (220).

10. Bloc-batterie selon la revendication 4, dans lequel
la poutre latérale (220) comprend une rainure d'insertion (222) ouverte sur la partie supérieure pour l'insertion de l'élément de prévention des étincelles (300), dans lequel
la rainure d'insertion (222) est formée à une position correspondant à une position dans laquelle le trou de décharge (221) est formé de manière à croiser le trou de décharge (221), et
le boîtier supérieur (100) est couplé au boîtier de bloc (200) en permettant à l'élément de prévention des étincelles (300) d'être inséré dans la rainure d'insertion (222).

11. Bloc-batterie selon la revendication 4, dans lequel
l'élément de prévention des étincelles (300) est disposé à l'extrémité inférieure du boîtier supérieur (100) à une position espacée de la poutre latérale (220) dans une direction horizontale à une distance prédéterminée.

12. Bloc-batterie selon la revendication 1, dans lequel
l'élément de prévention des étincelles (300) comprend un matériau électriquement isolant.

13. Bloc-batterie selon la revendication 1, dans lequel
l'élément de prévention des étincelles (300) comprend un matériau ignifuge.

14. Bloc-batterie selon la revendication 1, dans lequel
l'élément de prévention des étincelles (300) a une surface supérieure à la surface du trou de décharge (221).

15. Bloc-batterie selon la revendication 1, dans lequel
les trous de maille (310) présentent une forme circulaire ou polygonale.
